# EUROPEAN PATENT SPECIFICATION

(11) **EP 3 486 998 B1**
(45) Date of publication and mention of the grant of the patent: **02.08.2023**
(21) Application number: 18197998.0
(22) Date of filing: 01.10.2018
(51) Int. Cl.: H01Q 1/22, H01Q 1/38, H01Q 1/52, H01Q 7/00, H01Q 21/28

(54) **ANTENNA MODULE AND RADIO EQUIPMENT**
ANTENNENMODUL UND FUNKGERÄT
MODULE D'ANTENNE ET ÉQUIPEMENT RADIO

(30) Priority: 16.11.2017 JP 2017221186
(43) Date of publication of application: 22.05.2019
(73) Proprietor: Yokogawa Electric Corporation, Musashino-shi Tokyo 180-8750 (JP)
(72) Inventor: AONO, Yuji, Tokyo, 180-8750 (JP)
(74) Representative: Henkel & Partner mbB

(56) References cited:
- WO-A1-2017/031348
- US-A1- 2008 072 423
- US-A1- 2014 168 019

## Description

### BACKGROUND

### 1. TECHNICAL FIELD

The present invention relates to an antenna module and radio equipment.

### 2. RELATED ART

Antennas used in portable wireless communication terminals such as mobile phones are, for example, structured in such a manner that antenna elements are mounted on substrates or antenna patterns are formed on substrates. The antenna elements to be mounted on the substrates include, for example, a chip antenna element that is structured in such a manner that a spiral or zigzag conductive pattern is formed on the surface of a base made of a dielectric or magnetic substance, or a dielectric and magnetic substance (see, for example, Patent Document 1). The antenna patterns to be formed on the substrates include, for example, a loop antenna used in a Radio Frequency IDentifier (RFID) tag (see, for example, Patent Document 2).

Generally speaking, the antenna characteristics of the antenna element are degraded if metal structures approach the antenna element. Therefore, when mounted on the substrate, the chip antenna element is surrounded by an antenna formed region in which no patterns or parts are provided except for the minimum constituents required to operate the chip antenna element (for example, the power feeding conductor for the chip antenna element, the impedance matching circuit). In addition, since the chip antenna element needs to be positioned away from the ground pattern formed in a part arranged region in which parts are arranged, the chip antenna element is often mounted near the edge of the substrate. For this reason, when the chip antenna element is employed, it needs to be ensured that the substrate has the part arranged region and the antenna formed region that is spaced away from the part arranged region and positioned near the edge of the substrate, which means that the substrate requires a reasonably large area.

As for the loop antenna used in the RFID tag, one of the ends of the loop antenna is connected to one of the ends of the RFID tag integrated circuit (IC), and the other end is connected to the other end of the RFID tag IC. When magnetic flux generated by a loop antenna included in an external device (for example, an RFID reader/writer) passes through the loop antenna of the RFID tag, induced electromotive force is generated in the loop antenna of the RFID tag. This induced electromotive force operates the RFID tag IC and enables the RFID tag IC to perform data transmission.

### PRIOR ART DOCUMENTS

### PATENT DOCUMENTS

Patent document 1: Japanese Patent No. 4165323
Patent document 2: Japanese Patent Application Publication No. 10-224277

Radio equipment uses a chip antenna element to transmit sensor data via a wireless network and uses contactless communication based on infrared communication to perform provisioning. Here, "provisioning" represents a process of performing settings necessary to allow the radio equipment to participate in a wireless network. In recent years, during the provisioning process for the radio equipment, the settings may be performed using smartphones, tablet terminals and the like. If such is the case, it may be desired to perform the settings through contactless communication using a loop antenna embedded in the smartphones, tablet terminals and the like.

WO 2017 031 348 A1 discloses a multi-mode antenna, for wireless transmission of electrical energy and data, having a first inductor coil and a second inductor coil. A plurality of shielding materials are positioned throughout the antenna to minimize interference of the magnetic fields that emanate from the coils from surrounding materials. The antenna comprises a coil control circuit having at least one of an electric filter and an electrical switch configured to modify the electrical impedance of either or both the first and second coils.

US 2008 072 423 A1 discloses an inlay comprising an antenna wire having two end portions and a site for a transponder chip. In particular this document shows: mounting the wire to a surface of substrate; and leaving the end portions of the antenna wire free-standing, as loops adjacent terminal areas of a site on the substrate for the transponder chip. With the transponder chip installed on the substrate, the free-standing loops are repositioned to be substantially directly over the terminals of the transponder chip, in preparation for interconnection of the loops to the terminals of the transponder chip, then are bonded to the terminals. An embedding tool for mounting the wire on the substrate may embed the wire in or adhesively place a self-bonding wire on a surface of the substrate. The substrate may have two transponder chips, and function as a secure inlay.

US 2014 168019 A1 discloses a non-contact wireless communication coil, which includes a first coil, a second coil, a first magnetic body, and a second magnetic body. The first magnetic body, the first coil, the second magnetic body, and the second coil are laminated in this order in a thickness direction of the coils. The first coil and the second coil at least partially overlap each other.

### SUMMARY OF THE INVENTION

### PROBLEMS TO BE SOLVED BY THE INVENTION

According to the present invention the above object is achieved by an antenna module according to claim 1 and a radio equipment according to claim 5. The dependent claims are directed to different advantageous aspects of the invention.

To do so, the radio equipment needs to include both a chip antenna element and a loop antenna. As previously stated, however, the chip antenna element requires the antenna formed region near the edge of the substrate in the region excluding the part arranged region. Therefore, the chip antenna element, parts and loop antenna are arranged away from each other, which requires a large substrate. As a result, there are difficulties in reducing the size of the equipment. It may be suggested to form the loop antenna in a different substrate. Since more substrates are required, however, this suggestion does not solve the size-reduction issues and obstructs the attempts to lower the costs.

The present invention is made in light of the above-described problems and aims to provide an antenna module having a chip antenna element configured to perform wireless communication in a first frequency band and an antenna pattern configured to perform wireless communication in a second frequency band arranged in a space-saving manner and radio equipment that can achieve a reduced size by including the antenna module.

### GENERAL DISCLOSURE

To achieve the above-mentioned objective, one aspect of the present invention provides an antenna module (1). The antenna module (1) may include a substrate (11). The antenna module (1) may include an antenna element (chip antenna element 21) mounted on the substrate, where the antenna element is configured to perform wireless communication using a wireless signal of a first frequency band. The antenna module (1) may include an antenna pattern (loop antenna 31, loop antenna 931) formed on the substrate and surrounding the antenna element, where the antenna pattern is configured to perform wireless communication using a wireless signal of a second frequency band.

Such configurations can reduce the size of the antenna module that is configured to transmit and receive a wireless signal in the first frequency band used by the first antenna for communication and in the second frequency band used by the second antenna for communication.

In the antenna module relating to the one aspect of the present invention, the substrate may include at least two layers in which the antenna pattern is formed. The antenna pattern may include a first loop pattern that is formed like a loop in a first layer of the two layers. The antenna pattern may include a second loop pattern that is formed like a loop in a second layer of the two layers, where the second loop pattern at least partially overlaps the first loop pattern in a thickness direction of the substrate. The antenna pattern may include a connecting portion (314) connecting the first loop pattern and the second loop pattern to each other.

With such configurations, the antenna module can achieve a reduced size while it can be ensured to have a reasonable region in which the antenna element is arranged.

In the antenna module relating to the one aspect of the present invention, the antenna element may be positioned in a vicinity of a center of the antenna pattern.

With such configurations, a reasonable distance can be provided to separate the antenna pattern and the antenna element from each other. This can reduce the degradation of the antenna characteristics of the antenna element caused by the antenna pattern. Here, the vicinity of the center of the antenna pattern includes the midpoint of the inside region of the loop pattern and includes such a region that the distance from the inner edge of the loop pattern to each of the upper, lower, right and left outer edges of the antenna element is equal to or more than a predetermined value.

In the antenna module relating to the present invention, the substrate includes an antenna formed region in which no conductor or circuit is formed except for a power feeding conductor for the antenna element and an impedance matching circuit (23) constituted by a passive element. The antenna element and the antenna pattern are formed in the antenna formed region.

In the antenna module relating to the present invention, the antenna element is operated by power fed through the power feeding conductor. The antenna pattern is operated by power fed in a contactless manner from outside.

In the antenna module relating to the one aspect of the present invention, the antenna pattern (loop antenna 931) may be a loop pattern that is wound at least twice.

With such configurations, the antenna module can achieve a reduced size while it can be ensured to have a reasonable region in which the antenna element is arranged.

To achieve the above-mentioned objective, radio equipment (100) relating to a different one aspect of the present invention may include any one of the above-described antenna modules (1). The radio equipment (100) may include a battery (7) configured to feed power to the antenna module. The radio equipment (100) may include an electrical circuit (RF switch 2, transceiver 3, RFID tag controller 4, controller 6) configured to perform wireless communication with outside using the antenna module.

With such configurations, a small size can be achieved while wireless signals are transmitted and received in the first frequency band used by the first antenna for communication and in the second frequency band used by the second antenna for communication.

In the radio equipment relating to the different one aspect of the present invention, the battery may be positioned near the substrate so as not to overlap a direction in which communication is performed by the antenna element.

Such configurations can reduce the degradation of the antenna characteristics of the chip antenna element caused by the battery.

In the radio equipment relating to the different one aspect of the present invention, the electrical circuit may include a controller (6). The controller may perform such a control that a period of transmission performed by the antenna element does not overlap a period of transmission performed by the antenna pattern.

With such configurations, the communications are controlled in such a manner that, while one of the antenna element and the antenna pattern is performing communication, the other does not perform communication. Accordingly, the antenna characteristics of the antenna element and the antenna pattern can be prevented from degrading while they are performing communication.

The radio equipment relating to the different one aspect of the present invention may further include a sensor (5). The radio equipment may further include a battery case (105) housing therein the battery. The radio equipment may further include a body chassis (102) supporting the sensor and the battery case. The radio equipment may further include a body cover (104) attached to the body chassis and covering the sensor and the battery case.

Such configurations can reduce the size of the antenna module that is configured to transmit and receive a wireless signal in the first frequency band used by the first antenna for communication and in the second frequency band used by the second antenna for communication, and can also reduce the size of the radio communication equipment including the antenna module.

The summary clause does not necessarily describe all necessary features of the embodiments of the present invention. The present invention may also be a sub-combination of the features described above.

### EFFECT OF THE INVENTION

According to the present invention, it is possible to arrange the antenna element configured to perform wireless communication in a first frequency band and an antenna pattern configured to perform wireless communication in a second frequency band in a space-saving manner. It is also possible to reduce the size of radio equipment.

### BRIEF DESCRIPTION OF THE DRAWINGS

Fig, 1 shows an exemplary structure of radio equipment relating to an embodiment of the present invention.
Fig. 2 shows an exemplary structure of an antenna module relating to an embodiment of the present invention.
Fig. 3 is a plan view showing an exemplary structure of a loop antenna relating to an embodiment of the present invention.
Fig. 4 is a perspective view showing an exemplary structure of the loop antenna relating to the embodiment of the present invention.
Fig. 5 shows a cross-section along the A-A' line shown in Fig. 4.
Fig. 6 shows, as an example, the inside enclosed within the loop antenna relating to the embodiment of the present invention.
Fig. 7 shows, as an example, the inside enclosed within the loop antenna having a different exemplary structure.
Fig. 8 shows an exemplary manner of arranging a chip antenna element in the inside region enclosed within the loop antenna relating to the embodiment of the present invention.
Fig. 9 shows an exemplary manner of arranging a chip antenna element in the inside region enclosed within the loop antenna having the different exemplary structure.
Fig. 10A is a front view showing an exemplary manner of arranging the parts of radio equipment, which is constituted by the antenna module relating to the embodiment of the present invention.
Fig. 10B is a side view showing an exemplary manner of arranging the parts of radio equipment, which is constituted by the antenna module relating to the embodiment of the present invention.
Fig. 11 shows an exemplary structure of radio equipment, which is constituted by a chip antenna element relating to a comparative example.
Fig. 12 shows simulated results of the antenna characteristics of an antenna module relating to a comparative example and the antenna module relating to the embodiment of the present invention.
Fig. 13 shows simulated results of the antenna directivity of the antenna module relating to the comparative example and the antenna directivity of the antenna module relating to the embodiment of the present invention.
Fig. 14 shows an exemplary case where communication in a first frequency band does not overlap, in timing, communication in a second frequency band in the radio equipment relating to the embodiment of the present invention.
Fig. 15 shows an exemplary case where the communication in the first frequency band overlaps, in timing, the communication in the second frequency band in the radio equipment relating to the embodiment of the present invention.
Fig. 16 shows an exemplary case where an attempt is made to perform the communication in the second frequency band while the communication in the first frequency band is being performed in the radio equipment relating to the embodiment of the present invention.

### DESCRIPTION OF EXEMPLARY EMBODIMENTS

The following describes some embodiments of the present invention with reference to the drawings. The embodiments do not limit the invention according to the claims, and all the combinations of the features described in the embodiments are not necessarily essential to means provided by aspects of the invention. Note that, in the drawings referred to in the following description, the individual components are drawn to different scales, if necessary, in order to allow the individual components to have recognizable sizes.

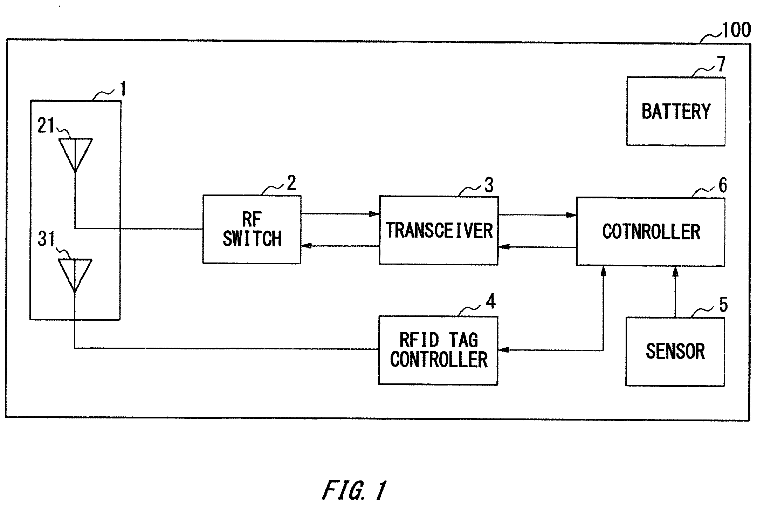

Fig. 1 shows an exemplary structure of radio equipment 100 relating to an embodiment of the present invention.

As shown in Fig. 1, the radio equipment 100 includes an antenna module 1, an RF switch 2 (an electrical circuit), a transceiver 3 (an electrical circuit), an RFID tag controller 4 (an electrical circuit), a sensor 5, a controller 6 (an electrical circuit) and a battery 7. The antenna module 1 has a chip antenna element 21 and a loop antenna 31 (an antenna pattern).

The radio equipment 100 transmits and receives a wireless signal in a first frequency band to/from a wireless gateway, which is not shown. The first frequency band is, for example, the frequency band used by the LoRa communication scheme, which is the communication standard proposed by the LoRa (registered trademark) Alliance and is one type of Low Power Wide Area Network (LPWAN). The radio equipment 100 transmits and receives a wireless signal in a second frequency band to/from a terminal, which is not shown. The second frequency band is, for example, the frequency band used for the communication by an RFID tag. The not-shown terminal is, for example, a smartphone, a tablet or notebook personal computer and the like having RFID reader/writer functions.

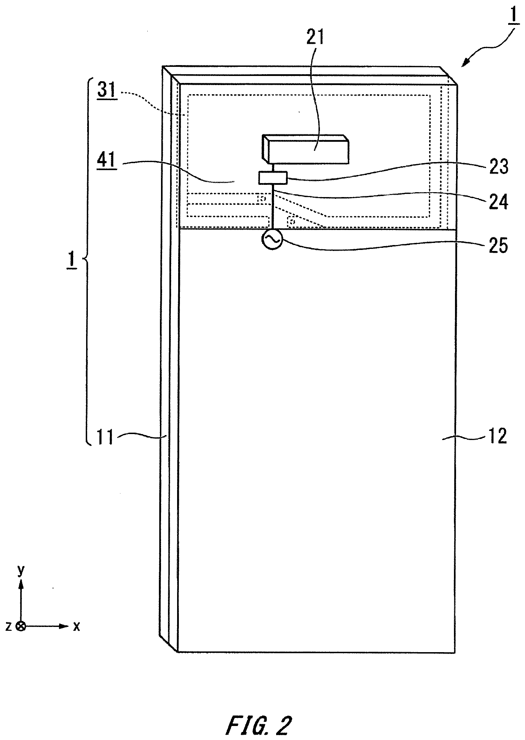

The chip antenna element 21 transmits and receives a wireless signal in the first frequency band. The chip antenna element 21 outputs the received wireless signal of the first frequency band to the RF switch 2. The chip antenna element 21 transmits a wireless signal of the first frequency band output from the RF switch 2. Note that the chip antenna element 21 operates in a self-feeding manner. To be specific, the chip antenna element 21 operates by receiving the delivery of the power that is obtained by converting the power output from the battery 7 into the power used for the transmission by the transceiver 3. The following description is made taking, as an exemplary antenna element, a chip antenna element in which the antenna is a chip part, but the antenna element may be an antenna having a different structure. In addition, the chip antenna element 21 may be mounted on the surface of a substrate 11 (see Fig. 2) or embedded in the substrate 11.

The loop antenna 31 transmits and receives a wireless signal in the second frequency band. The loop antenna 31 outputs the received wireless signal of the second frequency band to the RFID tag controller 4. The loop antenna 31 transmits a wireless signal of the second frequency band output from the RFID tag controller 4. Note that the loop antenna 31 operates on the power fed in a contactless manner from outside.

The RF switch 2 is a switch used to switch the wireless signal paths. The RF switch 2 outputs, to the transceiver 3, the wireless signal of the first frequency band output from the chip antenna element 21. The RF switch 2 outputs, to the chip antenna element 21, the wireless signal of the first frequency band output from the transceiver 3.

The transceiver 3 performs predetermined signal processing on the wireless signal of the first frequency band output from the RF switch 2 to extract information. The transceiver 3 outputs the extracted information to the controller 6. The transceiver 3 performs predetermined signal processing on the information output from the controller 6 to generate a wireless signal of the first frequency band. The transceiver 3 outputs the generated wireless signal of the first frequency band to the RF switch 2. The information output from the controller 6 is, for example, measurement information obtained by the measurement performed by the sensor 5.

The RFID tag controller 4 operates on the power fed in a contactless manner from outside and performs predetermined signal processing on the wireless signal of the second frequency band output from the loop antenna 31 to extract information. For example, when the not-shown terminal transmits information for provisioning to the radio equipment 100, the RFID tag controller 4 extracts the information for provisioning. The RFID tag controller 4 outputs the extracted information to the controller 6. The RFID tag controller 4 performs predetermined signal processing on the information output from the controller 6 to generate a wireless signal of the second frequency band. The RFID tag controller 4 outputs the generated wireless signal of the second frequency band to the loop antenna 31.

The sensor 5 is, for example, a temperature sensor, a humidity sensor, an atmospheric pressure sensor, a vibration sensor or the like. The sensor 5 outputs, to the controller 6, the measurement information obtained by the measurement performed by it.

The controller 6 outputs the measurement information output from the sensor 5 to the transceiver 3 in, for example, predetermined cycles. The controller 6 obtains the information output from the transceiver 3. Here, the information output from the transceiver 3 includes, for example, a request received from the not-shown wireless gateway, and the like. The controller 6 obtains the information output from the RFID tag controller 4. The information output from the RFID tag controller 4 includes, for example, the above-mentioned information for provisioning. The controller 6 performs settings (provisioning) to realize wireless communication through the chip antenna element 21 based, for example, on the information output from the RFID tag controller 4.

The battery 7 feeds power to all the constituents of the radio equipment 100 except for the loop antenna 31. The battery 7 is a primary or secondary battery.

Fig. 2 shows an exemplary structure of the antenna module 1 relating to the embodiment of the present invention. In Fig. 2, the y-axis, x-axis and z-axis directions respectively indicate the lengthwise, widthwise and thickness directions of the substrate 11.

As seen from Fig. 2, in the antenna module 1, an antenna formed region 41 is defined along one of the edges of the substrate 11 that oppose each other in the y-axis direction and a part arranged region 12 occupies the region excluding the antenna formed region 41. Note that the substrate 11 is a multilayer substrate made up by at least two layers.

On the surface of the antenna formed region 41, the chip antenna element 21 is attached. In the two layers of the antenna formed region 41, the loop antenna 31 is formed. In the part arranged region 12, a power feeding section 25 is formed. In the antenna formed region 41, no conductors are formed except for the power feeding conductor for the chip antenna element 21, and no conductor circuits are formed except for an impedance matching circuit 23.

In the part arranged region 12, for example, the RF switch 2, the transceiver 3, the RFID tag controller 4 and the controller 6, which are shown in Fig. 1, are arranged. The chip antenna element 21 and the power feeding section 25 are connected to each other via a power feeding pattern 24. Between the chip antenna element 21 and the power feeding section 25, the impedance matching circuit 23 is formed. The impedance matching circuit 23 is constituted by, for example, passive elements such as an inductor and a capacitor and can achieve a match between the impedance of the chip antenna element 21 and that of the transceiver 3. The power output from the battery 7 is converted into the power for the transmission from the transceiver 3. The power obtained by the conversion is fed to the chip antenna element 21 through the RF switch 2, the power feeding pattern 24 and the impedance matching circuit 23, so that the power is transmitted in the form of a wireless signal. The impedance matching circuit 23 is mounted on or formed in the surface of the substrate in the antenna formed region 41. Alternatively, the impedance matching circuit 23 may be formed in the substrate in the antenna formed region 41.

Here, the power feeding pattern 24 is formed in a different layer than the layer in which the loop antenna 31 is formed.

In other words, the antenna module 1 of the present embodiment is structured such that the chip antenna element 21 is attached to the substrate 11 in the antenna formed region 41 and the loop antenna 31 is formed in the same substrate 11 in the antenna formed region 41.

The following describes an exemplary structure of the loop antenna 31.

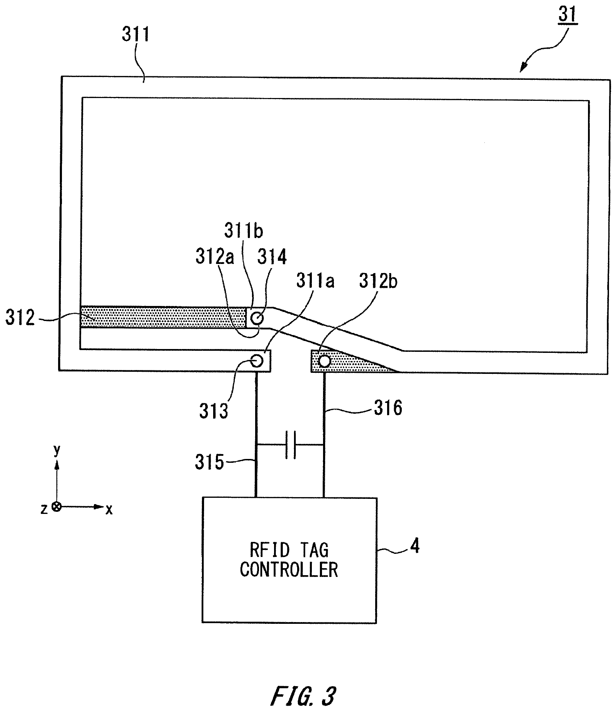

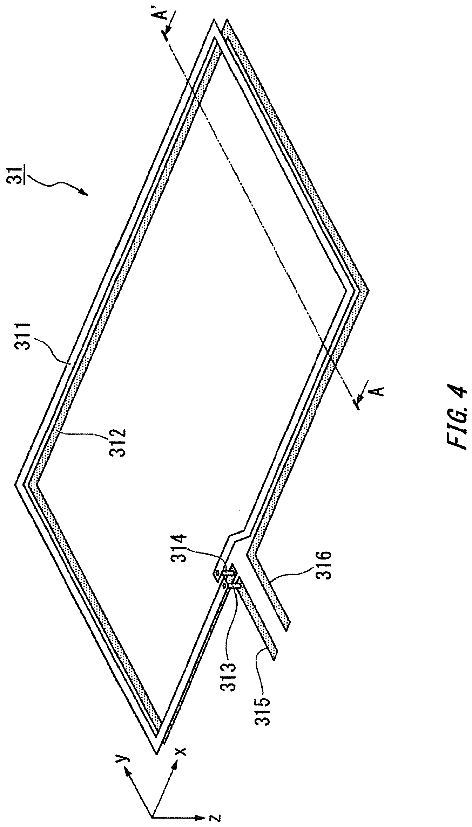

Fig. 3 is a plan view showing an exemplary structure of the loop antenna 31 relating to the embodiment of the present invention. Fig. 4 is a perspective view showing an exemplary structure of the loop antenna 31 relating to the embodiment of the present invention.

In Figs. 3 and 4, the x-axis, y-axis and z-axis directions respectively indicate the lengthwise, widthwise and thickness directions of the loop antenna 31.

As shown in Figs. 3 and 4, the loop antenna 31 includes an antenna pattern 311 (the first turn, a first loop pattern), an antenna pattern 312 (the second turn, a second loop pattern) and the connecting portion 314. The antenna pattern 311 is connected to a power feeding pattern 315 and the antenna pattern 312 through a connecting portion 313 and a connecting portion 314. The antenna pattern 312 is connected to the antenna pattern 311 through the connecting portion 314. The other end 312b of the antenna pattern 312 is connected to a power feeding pattern 316. As shown in Fig. 4, the other end 312b of the antenna pattern 312 may be continuous with the power feeding pattern 316. Furthermore, the antenna patterns 311 and 312 are connected to the RFID tag controller 4 through the power feeding patterns 315 and 316.

The antenna pattern 311 is the first turn and formed by, for example, a copper foil pattern in a first layer of the substrate 11 (see Fig. 2). One end 311a of the antenna pattern 311 is connected through the connecting portion 313 to the power feeding pattern 315, which is formed in a second layer of the substrate 11. The other end 311b of the antenna pattern 311 is connected through the connecting portion 314 to one end 312a of the antenna pattern 312, which is formed in the second layer of the substrate 11. The antenna pattern 311 and the antenna pattern 312 each have a width of, for example, 0.7 mm in the x-axis and y-axis directions and a thickness of, for example, 35 µm in the z-axis direction.

The antenna pattern 312 is the second turn and formed by, for example, a copper foil pattern in the second layer of the substrate 11. The one end 312a of the antenna pattern 312 is connected through the connecting portion 314 to the antenna pattern 311, which is formed in the first layer of the substrate 11. The other end 312b of the antenna pattern 312 is connected to the power feeding pattern 316, which is formed in the second layer of the substrate 11. The antenna pattern 312 has a width of, for example, 0.7 mm in the x-axis and y-axis directions and a thickness of, for example, 35 µm in the z-axis direction.

The connecting portions 313 and 314 are each a via, for example.

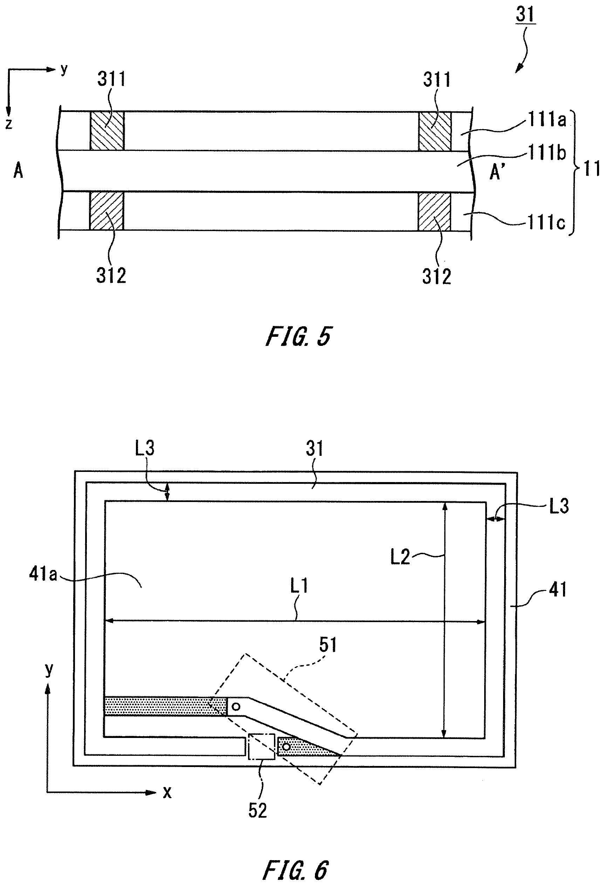

Fig. 5 shows a cross-section along the A-A' line shown in Fig. 4.

As shown in Fig. 5, in the substrate 11, an insulation layer 111b is formed under the first layer 111a, and the second layer 111c is formed under the insulation layer 111b in the z-axis direction.

In the first layer 111a, the antenna pattern 311 or the first turn is formed. In the second layer 111c, the antenna pattern 312 or the second turn is formed. In this manner, the antenna pattern 311 and the antenna pattern 312 are formed so as to at least partially overlap each other in the z-axis direction (when seen in the z-axis direction).

With the above-described configurations, the present embodiment can leave a sufficient region to have the chip antenna element 21 arranged therein while reducing the size of the antenna module 1.

The following describes the size of the space enclosed within the loop antenna 31.

Fig. 6 shows, as an example, the space enclosed within the loop antenna 31 relating to the embodiment of the present invention. Fig. 6 does not show the chip antenna element 21. In Fig. 6, the x-axis and y-axis directions respectively indicate the lengthwise and widthwise directions of the loop antenna 31. As described above, the two turns constituting the loop antenna 31 are formed in the two layers in the antenna formed region 41.

Here, the loop antenna 31 has a width L3 in the x-axis and y-axis directions. An inside region 41a of the loop antenna 31 has a length L1 in the x-axis direction. Here, the inside region 41a of the loop antenna 31 has a length L2 in the y-axis direction.

Fig. 6 shows an exemplary case where, as indicated by a reference numeral 51, the connecting portion between the first turn and the second turn is bent within the x-y plane, in the y-axis direction and toward the inside region 41a of the loop antenna 31, but the present invention is not limited to such. The connecting portion indicated by the reference numeral 51 may be shaped as a straight line. In this case, the connecting portion between the first turn and the second turn may be positioned in the region indicated by a reference numeral 52, for example.

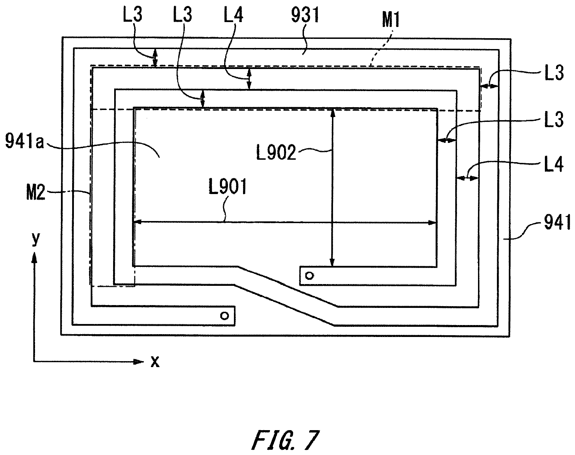

Fig. 7 shows, as an example, the space enclosed within a loop antenna 931 having a different exemplary structure in accordance with the embodiment of the present invention. The coordinates of Fig. 7 are similar to those of Fig. 6. According to this different exemplary structure, the loop antenna 31 is replaced with a loop antenna 931 that have two turns formed in a single layer in an antenna formed region 941. Here, the loop antenna 931 is a loop pattern that is wound at least twice on the surface, in the same layer, or inside of the substrate 11 in the antenna formed region 941. Here, the antenna formed region 941 relating to the different exemplary structure has the same length as the antenna formed region 41 in the x-axis and y-axis directions.

Here, the loop antenna 931 has a width L3 in the x-axis and y-axis directions. There is a gap L4 between the first turn and the second turn.

In this case, an inside region 941a of the loop antenna 931 has a length L901 in the x-axis direction, where L901 = L1 - (L3 + L4) × 2. Likewise, the inside region 941a of the loop antenna 931 has a length L902 in the y-axis direction, where L902 = L2 - (L3 + L4) × 2.

In the present embodiment shown in Fig. 6 and the like, the two turns of the loop antenna 31 are formed so as to at least partially overlap each other in the z-axis direction. Therefore, when compared with the different exemplary structure shown in Fig 7 in which the two turns are formed in the single layer, the lengths of the space enclosed within the loop antenna 31 in the x-axis and y-axis directions are longer by (L3 + L4) × 2. For the reasons described above, the inside region 41a of the loop antenna 31 of the present embodiment has a larger area than the inside region 941a of the different exemplary structure at least by M1 + M2 × 2 = (L3 + L4) ×L1 + [(L3 + L4) ×{L2 - (L3 + L4) × 2}] × 2 at the top, left and right.

In the present embodiment, the chip antenna element 21 is arranged in the inside region 41a of the loop antenna 31.

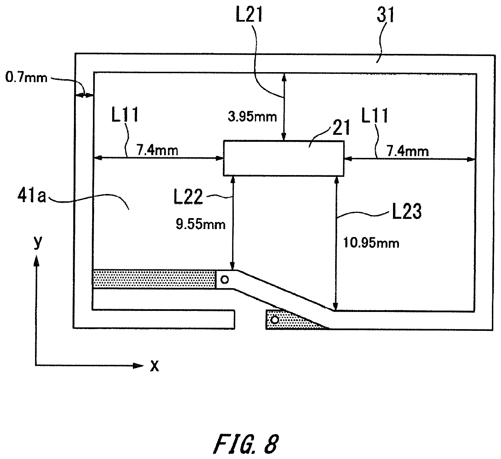

Fig. 8 shows an exemplary manner of arranging the chip antenna element 21 in the inside region 41a enclosed within the loop antenna 31 relating to the embodiment of the present invention. The coordinates of Fig. 8 are similar to those of Fig. 6. The chip antenna element 21 is sized such that the length in the x-axis direction is 3 mm and the length in the y-axis direction is 10. 5 mm. The loop antenna 31 has a width of 0.7 mm in the x-axis and y-axis directions.

The width (gap) L21 between the upper edge of the chip antenna element 21 and the loop antenna 31 is 3.95 mm. Regarding the width between the lower edge of the chip antenna element 21 and the loop antenna 31, the narrowest width L22 is 9.55 mm and the wide width L23 is 10.95 mm. In addition, the width L11 defined between each of the right and left side surfaces of the chip antenna element 21 and the loop antenna 31 is 7.4 mm.

With the above-described configurations, the present embodiment can reduce the degradation in the antenna characteristics of the chip antenna element caused by the antenna pattern.

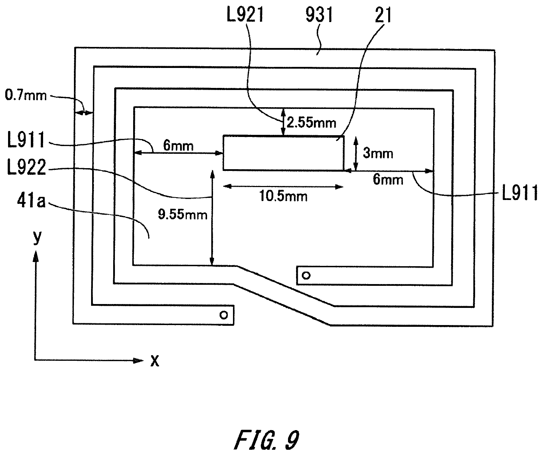

Fig. 9 shows an exemplary manner of arranging the chip antenna element 21 in the inside region 941a enclosed within the loop antenna 931 having the different exemplary structure in accordance with the present embodiment. Here, the loop antenna 931 of Fig. 9 is formed, for example, in a region having the same area as the antenna formed region 41 in which the loop antenna 31 of Fig. 8 is formed. The coordinates of Fig. 9 are similar to those of Fig. 8. The chip antenna element 21 has the same size as in Fig. 8.

The width L921 between the upper edge of the chip antenna element 21 and the loop antenna 931 is 2.55 mm. The width L922 between the lower edge of the chip antenna element 21 and the loop antenna 931 is 9.55 mm. In addition, the width L911 defined between each of the right and left side surfaces of the chip antenna element 21 and the loop antenna 931 is 6 mm.

As can be seen from above, the present embodiment shown in Fig. 8 can ensure that a longer gap is provided between the chip antenna element 21 and the loop antenna 31 when compared with the different exemplary structure shown in Fig. 9. Note that the different exemplary structure shown in Fig. 9 can also realize a reduced size since the chip antenna element 21 is enclosed within the loop antenna 931 as is shown in Fig. 8, although the antenna characteristics achieved by the structure shown in Fig. 9 are poorer than those achieved by the structure shown in Fig. 8.

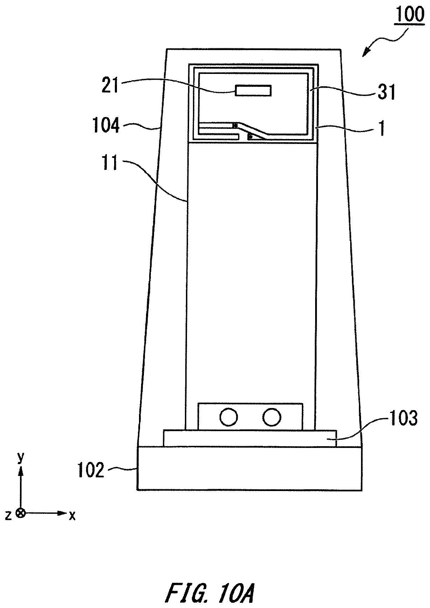

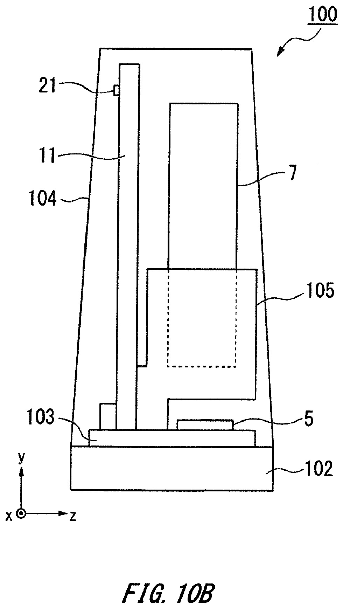

The positioning shown in Fig. 8 is illustrative and the present invention is not limited to such. The chip antenna element 21 is positioned such that the width L23 is longer than the width L21 as shown in Fig. 8 in order to reduce the influence on the communication that may be caused by the battery 7 when the antenna module 1 is incorporated into the radio equipment 100, which will be described later with reference to Figs. 10A and 10B. Therefore, the chip antenna element 21 is desirably positioned in the vicinity of the center of the inside region 41a of the loop antenna 31 if the battery 7 has a small height. Here, the vicinity of the center of the inside region 41a of the loop antenna 31 includes the midpoint of the inside region 41a of the loop antenna 31 and includes such a region that the distance from the inner edge of the loop antenna 31 to each of the upper, lower, right and left outer edges of the chip antenna element 21 is equal to or more than a predetermined value.

The following describes an exemplary manner of arranging the parts of the radio equipment 100 including the antenna module 1.

Figs. 10A and 10B are respectively a front view and a side view showing an exemplary manner of arranging the parts of the radio equipment 100 including the antenna module 1 relating to the present embodiment. Fig. 10A is a front view of the radio equipment 100. Fig. 10B is a side view of the radio equipment 100.

As shown in Fig. 10A, the substrate 11 is attached to a body chassis 102 through an attachment member 103, which serves as a support. Here, the body chassis 102 is integrated with the attachment member 103. The substrate 11 has the part arranged region and the antenna formed region. In the antenna formed region, the antenna module 1 is formed. The antenna module 1 includes the chip antenna element 21 and the loop antenna 31. In the inside region of the loop antenna 31, the chip antenna element 21 is attached. In the part arranged region, for example, the RF switch 2, the transceiver 3, the RFID tag controller 4 and the controller 6, which are shown in Fig. 1, are arranged. A reference numeral 104 represents a body cover. Figs. 10A and 10B only show the shape of the body cover 104 since they are used to describe the inside of the body cover 104.

As shown in Fig. 10B, the sensor 5 is attached to the body chassis 102 integrated with the attachment member 103. The battery 7 is held in a battery case 105 that is positioned in the vicinity of the substrate 11. The battery case 105 is attached to the body chassis 102 integrated with the attachment member 103. The body cover 104 is attached to the body chassis 102 and covers the sensor 5, the battery 7, the battery case 105 and the substrate 11. As described above, the battery 7 is positioned near the substrate 11 within the body cover. Here, "near the substrate 11" means the vicinity of the substrate 11 and may include contacting the substrate 11. Here, in the x-y plane, the chip antenna element 21 exhibits the characteristics of a horizontally polarized antenna in terms of the horizontal direction that is defined by treating the x-y plane as the horizontal plane. Also, in the y-z plane, the chip antenna element 21 exhibits the characteristics of a horizontally polarized antenna in terms of the horizontal direction that is defined by treating the y-z plane as the horizontal plane. Also, in the z-x plane, the chip antenna element 21 exhibits the characteristics of a vertically polarized antenna in terms of the horizontal direction that is defined by treating the z-x plane as the horizontal plane. The following studies the case where the chip antenna element 21 performs wireless communication in, for example, the -z-axis direction and +z-axis direction. In this case, it is preferable that, on the back of the substrate 11 having the chip antenna element 21 attached thereto, that is, on the surface of the substrate 11 facing the battery 7, the wireless communication of the chip antenna element 21 performed through the vertically polarized wave on the z-x plane with respect to the horizontal direction that is defined by treating the z-x plane as the horizontal plane and through the horizontally polarized wave on the y-z plane with respect to the horizontal direction that is defined by treating the y-z plane as the horizontal plane may not be blocked. Therefore, in the present embodiment, the battery 7 is arranged at such a position and a height that the battery 7 does not block the radio direction of the chip antenna element 21. In this manner, in the present embodiment, the battery 7 can be prevented from blocking the wireless signal, and the battery 7 can be arranged so as not to overlap the chip antenna element 21, that is to say, at such a height in the y-axis direction that the battery 7 does not obstruct the communication performed by the chip antenna element 21. With such configurations, the present embodiment can reduce the degradation in the characteristics of the chip antenna element 21 that may be caused by the battery 7.

### <Simulated Results>

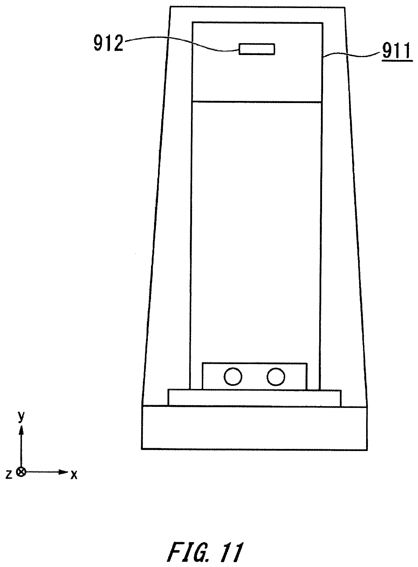

The following describes the simulated characteristics. As a comparative example, an antenna module including a chip antenna element only, which is shown in Fig. 11, was also simulated.

Fig. 11 shows an exemplary structure of radio equipment including the chip antenna element relating to the comparative example.

As shown in Fig. 11, an antenna module 911 of the radio equipment relating to the comparative example has a chip antenna element 912 arranged in the antenna formed region.

Note that the chip antenna element receives the frequency of 924 MHz, which is used by the LoRa communication scheme.

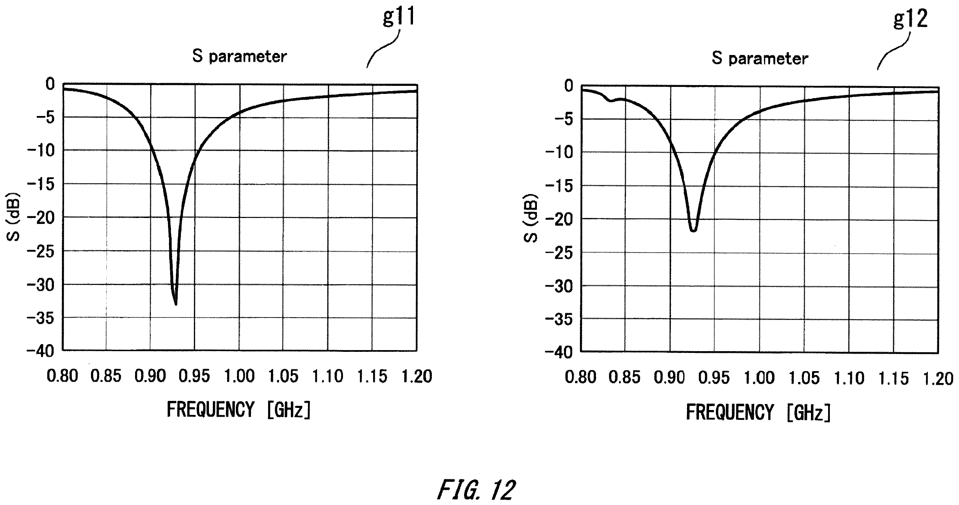

Fig. 12 shows the simulated antenna characteristics of the antenna module 911 relating to the comparative example and the simulated antenna characteristics of the antenna module 1 relating to the embodiment of the present invention. The graph indicated by the reference sign g11 indicates the simulated antenna characteristics relating to the antenna module 911 of the comparative example. The graph indicated by the reference sign g12 indicates the simulated antenna characteristics of the antenna module 1 relating to the present embodiment. In Fig. 12, the horizontal axis represents the frequency and the vertical axis represents the magnitude of the S11 (return loss), which is one of the S-parameters.

As shown by the graph indicated by the reference sign g11, the chip antenna element 912 relating to the comparative example in which no loop antenna is formed in the antenna formed region exhibited an S11 of -32.85 dB at the frequency of 924 MHz.

On the other hand, as shown by the graph indicated by the reference sign g12, the antenna module 1 relating to the present embodiment exhibited an S11 of -21.60 dB at the frequency of 924 MHz.

As mentioned above, although the chip antenna element 21 is attached in the inside region of the loop antenna 31 in the present embodiment, the magnitude of the S11 can be -21.60 db at the frequency of 924 MHz.

Here, as shown by the graph indicated by the reference sign g12, the present embodiment can reduce the influence on the frequencies other than 924 MHz, which is the frequency utilized by the chip antenna element 21.

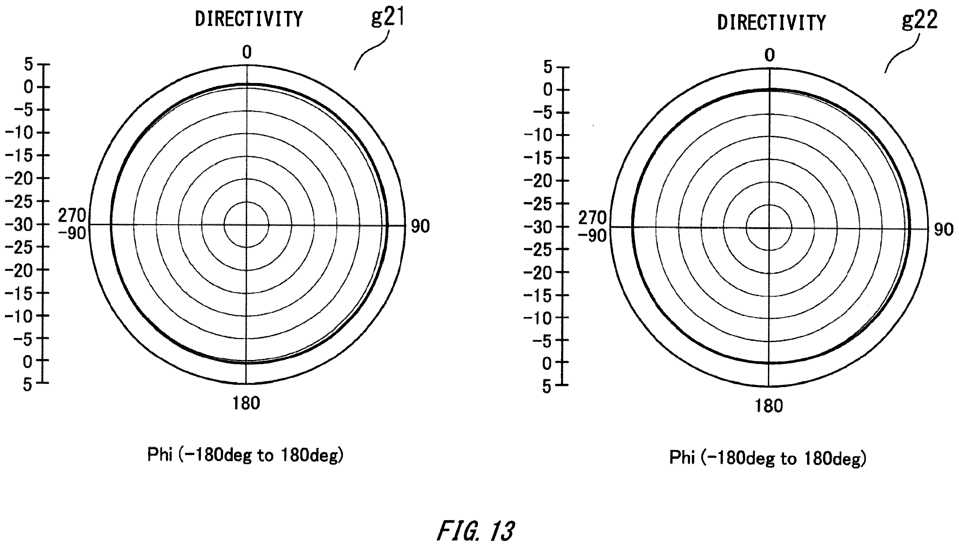

Fig. 13 shows the simulated antenna directivity of the antenna module 911 relating to the comparative example and the simulated antenna directivity of the antenna module 1 relating to the embodiment of the present invention. The graph indicated by the reference sign g21 shows the simulated antenna directivity of the antenna module 911 relating to the comparative example. The graph indicated by the reference sign g22 shows the simulated antenna directivity of the antenna module 1 of the present embodiment. Note that Fig. 13 shows the directivity of the antennas in terms of the polarized waves in the horizontal and vertical planes at the frequency of 924 MHz. In Fig. 13, the vertical axis represents the gain, and the numbers "0," "90," "180," "270," and -90" indicate the angles.

As shown in Fig. 13, the antenna module 1 of the the present embodiment can achieve the directivity equal to that of the comparative example.

As described above, in the present embodiment, the loop antenna 31 is formed in two layers and formed in the antenna formed region in such a manner that the first turn and the second turn at least partially overlap each other in the z-axis direction. In the present embodiment, the chip antenna element 21 is arranged in the inside region 41a enclosed within the loop antenna 31. In other words, in the antenna module 1 of the the present embodiment, the antenna pattern constituting the loop antenna 31 is formed around the chip antenna element 21. In order to increase the distance between the chip antenna element 21 and the loop antenna 31, the present embodiment employs a multilayer substrate structure to realize the winding structure, according to which the first turn of the antenna pattern is formed in a different layer than the second turn of the antenna pattern. In this manner, the present embodiment can increase the distance between the chip antenna element 21 and the antenna pattern constituting the loop antenna 31, thereby reducing the degradation of the characteristics of the chip antenna element 21.

In the above-described manner, the present embodiment can reduce the area occupied by the two antennas by efficiently arranging the two antennas in a single substrate. In addition, the present embodiment can realize an efficient antenna pattern that can reduce the degradation of the antenna characteristics of the chip antenna element 21 as much as possible. As a consequence, the present embodiment can reduce the degradation of the characteristics of the chip antenna element 21 as much as possible with it being possible to reduce the area of the antenna formed region.

### <Timing of communication>

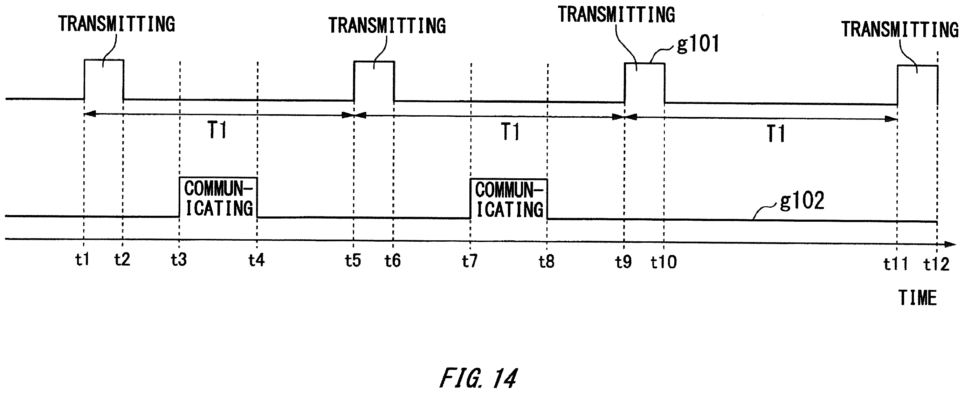

The following describes, as an example, the timings of the communications performed using the two antennas (the chip antenna element 21 and the loop antenna 31) with reference to Figs. 14 to 16. In Figs. 14 to 16, the horizontal axis represents the time and the vertical axis represents the voltage. Note that the radio equipment 100 has the structure shown in Fig. 1. The first frequency band is the frequency band used by the chip antenna element 21 to perform communication. The second frequency band is the frequency band used by the loop antenna 31 to perform communication. In Figs. 14 to 16, the reference sign g101 denotes the state of the wireless communication in the first frequency band and the reference sign g102 denotes the state of the wireless communication in the second frequency band.

The chip antenna element 21 performs the wireless communication in the first frequency band in cycles of a period T1. The timing of the communication performed by the chip antenna element 21 is controlled by the controller 6 (see Fig. 1).

The loop antenna 31 performs the communication when the user places a not-shown terminal close to the loop antenna 31.

Fig. 14 shows an exemplary case where the communication in the first frequency band does not overlap the communication in the second frequency band in timing in the radio equipment 100 relating to the embodiment of the present invention. In Fig. 14, the horizontal axis represents the time.

The chip antenna element 21 transmits information during the period from a timing t1 to a timing t2, the period from a timing t5 to a timing t6, the period from a timing t9 to a timing t10, and the period from a timing t11 to a timing t12.

The loop antenna 31 performs the wireless communication in the second frequency band during the period from a timing t3 to a timing t4 and the period from a timing t7 to a timing t8. In the exemplary case shown in Fig. 14, the period of the communication performed by the chip antenna element 21 does not overlap the period of the communication performed by the loop antenna 31 as seen from the drawing.

Accordingly, the communication by the chip antenna element 21 and the communication by the loop antenna 31 can be both performed in accordance with the timings shown in Fig. 14.

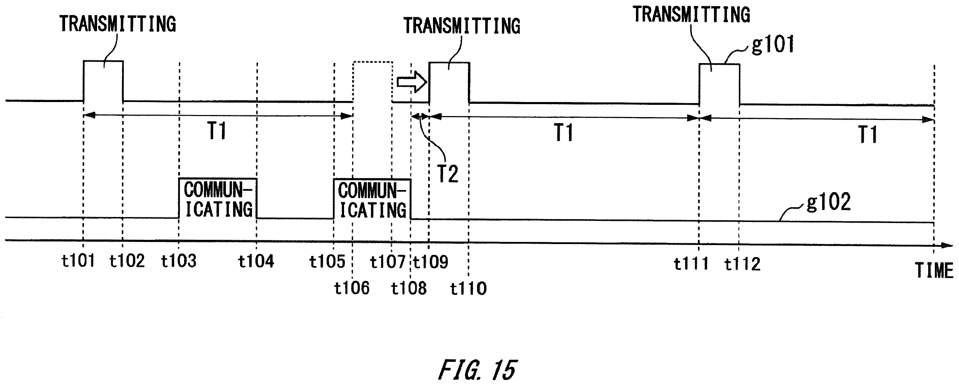

Fig. 15 shows an exemplary case where the communication in the first frequency band overlaps the communication in the second frequency band in timing in the radio equipment 100 relating to the embodiment of the present invention. In Fig. 15, the horizontal axis represents the time.

In the exemplary case shown in Fig. 15, the chip antenna element 21 first transmits information in the first frequency band during the period from a timing t101 to a timing tl02, and the loop antenna 31 then performs wireless communication in the second frequency band during the period from a timing t103 to a timing t104.

Since the user places a not-shown terminal close to the loop antenna 31, the loop antenna 31 performs wireless communication in the second frequency band during the period from a timing t105 to a timing t108. Here, the period from the timing t105 to the timing t108 overlaps the period from a timing t106 to a timing t107, during which the chip antenna element 21 is scheduled to perform communication. In this case, the controller 6 controls the timings of the communications in such a manner that the communication using the chip antenna element 21 is not performed at the scheduled timings and information is alternatively transmitted by the chip antenna element 21 when a predetermined period T2 has elapsed after the end of the communication using the loop antenna 31, during the period from a timing t109 to a timing t110.

In addition, the controller 6 controls the timings of the communications such that the next round of communication using the chip antenna element 21 is performed when the period T1 has elapsed after the timing t109, during the period from a timing t111 to a timing t112.

In other words, when the scheduled timing of the wireless communication in the first frequency band is reached while the wireless communication is in progress in the second frequency band, the controller 6 controls the timings of the communications in such a manner that the wireless communication in the first frequency band is not performed while the wireless communication is in progress in the second frequency band. The controller 6 controls the timings of the communications in such a manner that the wireless communication in the first frequency band can be alternatively started when the period T2 has elapsed after the detection of the end of the wireless communication in the second frequency band.

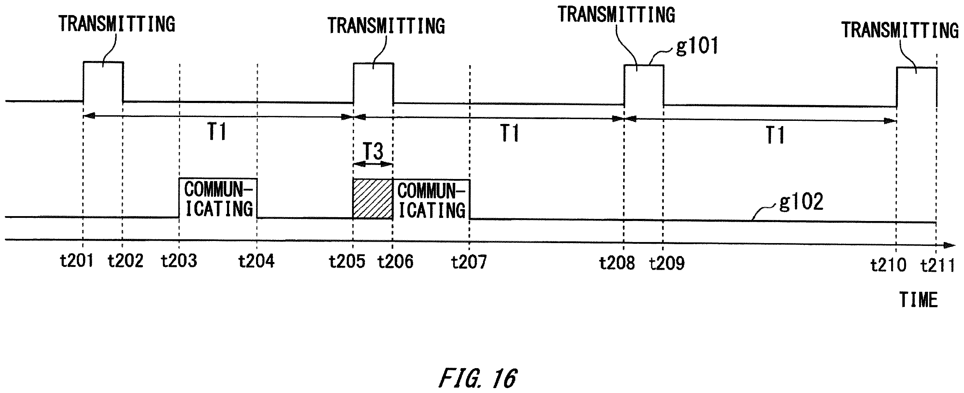

Fig. 16 shows an exemplary case where an attempt is made to perform the communication in the second frequency band while communication is being performed in the first frequency band in the radio equipment 100 relating to the embodiment of the present invention. In Fig. 16, the horizontal axis represents the time.

In the exemplary case shown in Fig. 16, the chip antenna element 21 first transmits information in the first frequency band during the period from a timing t201 to a timing t202, and the loop antenna 31 then performs wireless communication in the second frequency band during the period from a timing t203 to a timing t204. The controller 6 controls the timings of the communications such that the communication in the first frequency band is performed during the period from a timing t205 to a timing t206, which starts when the period T1 has elapsed after the timing t201.

If the user places a not-shown terminal close to the loop antenna 31 during the period from the timing t205 to the timing t206 (the period T3), the controller 6 controls the timings of the communications in such a manner that the communication by the loop antenna 31 is performed during the period from a timing t206 to a timing t207, which is placed after the end of the communication by the chip antenna element 21.

In other words, when an attempt is made to perform the wireless communication in the second frequency band while the wireless communication is in progress in the first frequency band, the controller 6 does not allow the wireless communication in the second frequency band to be performed while the wireless communication in the first frequency band is being performed. In this manner, the wireless communication in the second frequency band is prohibited until the wireless communication in the first frequency band ends. The controller 6 controls the timings of the communications in such a manner that the wireless communication in the second frequency band is allowed when the wireless communication in the first frequency band ends. Here, the controller 6 may control the RFID tag controller 4 for the second frequency band to remain in the low power consumption mode during the communication-prohibited period.

It should be noted that the timings of the communications shown in Figs. 14 to 16 are only illustrative and the present invention is not limited to such. For example, with reference to Fig. 15, the controller 6 may control the timings of the communications in such a manner that the chip antenna element 21 may start the communication before the period T2 has elapsed after the timing t108 at which the loop antenna 31 ends the communication.

As seen from the exemplary cases shown in Figs. 14 to 16, the timings of the communications are controlled in such a manner that the transmission by the chip antenna element 21 does not overlap the transmission by the loop antenna 31 in timing in the present embodiment.

With such configurations, while one of the chip antenna element 21 and the loop antenna 31 performs communication, the other does not perform communication in the present embodiment. Therefore, the present embodiment can prevent the degradation of the antenna characteristics of the chip antenna element 21 and the loop antenna 31 during the communication.

In addition, the position of the chip antenna element 21 is not limited to the above-described position and can be changed as appropriate provided that the antenna characteristics required by the radio equipment 100 are satisfied.

The above description is made with reference to the exemplary case where the antenna pattern constituting the loop antenna 31 has two turns, but the present invention is not limited to such. In order to improve the communication characteristics of the RFID tag, the number of the turns of the loop antenna 31 may be increased to three or four using a multilayer substrate so that the inductance L value is raised. In this case, the antenna patterns in the respective layers are also formed to overlap each other.

Note that the shape of the loop antenna 31 is not limited to the shape shown in Fig. 6 and the like. The loop antenna 31 may be shaped like a square, polygon, circle, ellipsoid or the like.

The program to implement some or all of the functions of the radio equipment 100 relating to the present invention except for the functions of the antenna module 1 may be stored in a computer readable storage medium, and the program stored in the storage medium may be read and executed by a computer system so that the computer system can perform some or all of the operations performed by the radio equipment 100 (except for the antenna module 1). Here, the "computer system" may include OS and hardware such as peripheral devices. The term "computer system" may also include a WWW system provided with a website providing environment (or displaying environment). The term "computer readable storage medium" means a storage device including a portable medium such as a flexible disk, a magnetooptical disk, ROM or CDROM, and a hard disk embedded in the computer system. In addition, the term "computer readable storage medium" also includes a medium configured to retain the program for a certain period of time, such as volatile memory (RAM) incorporated into the computer system, which serves as a server or client when the program is transmitted over a network such as the Internet and a communication link such as a phone link.

The above-mentioned program may be transmitted from a computer system that stores the program into a storage device or the like to a different computer system via a transmission medium or a transmission wave in the transmission medium. Here, the term "transmission medium" via which the program is transmitted denotes a medium that is capable of transmitting information, for example, a network (communication network) such as the Internet or a communication link (communication line) such as a phone link. The above-mentioned program may be designed to implement some of the above-mentioned functions. The above-mentioned program may be designed to be capable of implementing the above-mentioned functions in combination with the program that has already been stored in the computer system, that is to say, a differential file (differential program).

While the embodiments of the present invention have been described, the technical scope of the invention is not limited to the above described embodiments. It is apparent to persons skilled in the art that various alterations and improvements can be added to the above-described embodiments. It is also apparent from the scope of the claims that the embodiments added with such alterations or improvements can be included in the technical scope of the invention.

### EXPLANATION OF REFERENCES

100 : radio equipment, 1 : antenna module, 2 : RF switch, 3 : transceiver, 4 : RFID tag controller, 5 : sensor, 6 : controller, 7 : battery, 21 : chip antenna element, 23 : impedance matching circuit, 24 : power feeding pattern, 25 : power feeding section, 31 and 931 : loop antenna, 41 : antenna formed region, 41a : inside region of loop antenna, 313 and 314 : connecting portion, 315 and 316 : power feeding pattern

## Claims

1. An antenna module comprising:
a substrate (11);
an antenna element (21) mounted on the substrate (11), the antenna element (21) configured to perform wireless communication using a wireless signal of a first frequency band; and
a loop antenna (31) formed on the substrate (11) and surrounding the antenna element (21), the loop antenna (31) configured to perform wireless communication using a wireless signal of a second frequency band;
wherein the antenna element (21) is configured to be operated by power fed through a power feeding conductor (24), and the loop antenna (31) is configured to be operated by power fed in a contactless manner from outside
wherein the substrate (11) includes, at one edge of the substrate (11), an antenna formed region (41) in which no conductor or circuit is formed except for the power feeding conductor for the antenna element (21) and an impedance matching circuit (23) constituted by a passive element, and
wherein the antenna element (21) and the loop antenna (31) are formed in the antenna formed region (41), and a power feeding section (25) configured to feed the power to the antenna element (21) through the power feeding conductor (24) is provided in a region other than the antenna formed region (41).

2. The antenna module as set forth in Claim 1, wherein
the substrate (11) includes at least two layers in which the loop antenna (31) is formed,
the loop antenna (31) includes:
a first loop pattern (311) that is formed like a loop in a first layer of the two layers;
a second loop pattern (312) that is formed like a loop in a second layer of the two layers, the second loop pattern (312) at least partially overlapping the first loop pattern (311) in a thickness direction of the substrate; and
a connecting portion (313) connecting the first loop pattern (311) and the second loop pattern (312) to each other.

3. The antenna module as set forth in one of Claims 1 and 2, wherein
the antenna element (21) is positioned in a vicinity of a center of the loop antenna (31).

4. The antenna module as set forth in Claim 1, wherein
the loop antenna (31) is a loop pattern that is wound at least twice.

5. Radio equipment comprising:
the antenna module as set forth in one of Claims 1 to 4;
a battery (7) configured to feed power to the antenna module; and
an electrical circuit configured to perform wireless communication (4) with outside using the antenna module.

6. The radio equipment as set forth in Claim 5, wherein
the battery (7) is positioned near the substrate (11) so as not to overlap a direction in which communication is performed by the antenna element (21).

7. The radio equipment as set forth in one of Claims 5 and 6, wherein
the electrical circuit includes a controller (6), and
the controller (6) is configured to perform such a control that a period of transmission performed by the antenna element (21) does not overlap a period of transmission performed by the loop antenna (31).

8. The radio equipment as set forth in one of Claims 5 to 7, further comprising:
a sensor (5);
a battery case housing therein the battery (7);
a body chassis supporting the sensor (5) and the battery case; and
a body cover attached to the body chassis and covering the sensor (5) and the battery case.

## Patentansprüche

1. Ein Antennenmodul, umfassend:
ein Substrat (11);
ein Antennenelement (21), das auf dem Substrat (11) angebracht ist, wobei das Antennenelement (21) konfiguriert ist, um drahtlose Kommunikation unter Verwendung eines drahtlosen Signals eines ersten Frequenzbandes durchzuführen; und
eine Schleifenantenne (31), die auf dem Substrat (11) ausgebildet ist und das Antennenelement (21) umgibt, wobei die Schleifenantenne (31) konfiguriert ist, um drahtlose Kommunikation unter Verwendung eines drahtlosen Signals eines zweiten Frequenzbandes durchzuführen;
wobei das Antennenelement (21) konfiguriert ist, um mit Strom betrieben zu werden, der durch einen Stromversorgungsleiter (24) zugeführt wird, und die Schleifenantenne (31) konfiguriert ist, um mit Strom betrieben wird, der kontaktlos von außen zugeführt wird
wobei das Substrat (11) an einem Rand des Substrats (11) einen als Antenne ausgebildeten Bereich (41) enthält, in dem kein Leiter oder keine Schaltung ausgebildet ist, mit Ausnahme des Stromversorgungsleiters für das Antennenelement (21) und einer Impedanzanpassungsschaltung (23), die aus einem passiven Element besteht, und
wobei das Antennenelement (21) und die Schleifenantenne (31) in dem als Antenne ausgebildeten Bereich (41) ausgebildet sind und wobei ein Stromversorgungsabschnitt (25), der konfiguriert ist, um dem Antennenelement (21) durch den Stromversorgungsleiter (24) Strom zuzuführen, in einem anderen Bereich als dem als Antenne ausgebildeten Bereich (41) vorgesehen ist.

2. Das Antennenmodul nach Anspruch 1, wobei
das Substrat (11) mindestens zwei Schichten umfasst, in denen die Schleifenantenne (31) ausgebildet ist,
die Schleifenantenne (31) umfasst:
ein erstes Schleifenmuster (311), das wie eine Schlaufe in einer ersten Schicht der beiden Schichten augebildet ist;
ein zweites Schleifenmuster (312), das wie eine Schleife in einer zweiten Schicht der beiden Schichten ausgebildet ist, wobei das zweite Schleifenmuster (312) das erste Schleifenmuster (311) in einer Dickenrichtung des Substrats zumindest teilweise überlappt; und
einen Verbindungsabschnitt (313), der das erste Schleifenmuster (311) und das zweite Schleifenmuster (312) miteinander verbindet.

3. Das Antennenmodul nach einem der Ansprüche 1 und 2, wobei
das Antennenelement (21) in der Nähe der Mitte der Schleifenantenne (31) angeordnet ist.

4. Das Antennenmodul nach Anspruch 1, wobei
die Schleifenantenne (31) eine Schleifenantenne ist, die mindestens zweimal gewickelt ist.

5. Eine Funkausrüstung, umfassend:
das Antennenmodul nach einem der Ansprüche 1 bis 4;
eine Batterie (7), die konfiguriert ist, um das Antennenmodul mit Strom versorgt; und
eine elektrische Schaltung, die skonfiguriert ist, um unter Verwendung des Antennenmoduls eine drahtlose Kommunikation (4) mit der Außenwelt durchzuführen.

6. Die Funkausrüstung nach Anspruch 5, wobei
die Batterie (7) in der Nähe des Substrats (11) so angeordnet ist, dass sie eine Richtung, in der die Kommunikation durch das Antennenelement (21) erfolgt, nicht überlappt.

7. Die Funkausrüstung nach einem der Ansprüche 5 und 6, wobei
die elektrische Schaltung ein Steuergerät (6) enthält, und
die Steuerung (6) konfiguriert ist, um eine solche Steuerung durchführt, dass eine Sendezeitspanne, die von dem Antennenelement (21) durchgeführt wird, eine Sendezeitspanne, die von der Schleifenantenne (31) durchgeführt wird, nicht überlappt.

8. Die Funkausrüstung nach einem der Ansprüche 5 bis 7, die ferner umfasst:
einen Sensor (5);
ein Batteriegehäuse, in dem die Batterie (7) untergebracht ist;
ein Gehäuse, das den Sensor (5) und das Batteriegehäuse trägt; und
eine Gehäuseabdeckung, die am Gehäusechassis befestigt ist und den Sensor (5) und das Batteriegehäuse abdeckt.

## Revendications

1. Module d'antenne comprenant :
un substrat (11) ;
un élément d'antenne (21) monté sur le substrat (11), l'élément d'antenne (21) étant configuré pour réaliser une communication sans fil en utilisant un signal sans fil sur une première bande de fréquences ; et
une antenne cadre (31) formée sur le substrat (11) et entourant l'élément d'antenne (21), l'antenne cadre (31) étant configurée pour réaliser une communication sans fil en utilisant un signal sans fil sur une deuxième bande de fréquences ;
dans lequel l'élément d'antenne (21) est configuré pour être actionné par une énergie alimentée par l'intermédiaire d'un conducteur d'alimentation d'énergie (24), et l'antenne cadre (31) est configurée pour être actionnée par une énergie alimentée d'une manière sans contact à partir de l'extérieur
dans lequel le substrat (11) comporte, au niveau d'un bord du substrat (11), une région formée pour antenne (41) dans laquelle aucun conducteur ni circuit n'est formé à l'exception du conducteur d'alimentation d'énergie pour l'élément d'antenne (21) et d'un circuit d'adaptation d'impédance (23) constitué d'un élément passif, et
dans lequel l'élément d'antenne (21) et l'antenne cadre (31) sont formés dans la région formée pour antenne (41), et une section d'alimentation d'énergie (25) configurée pour alimenter en énergie l'élément d'antenne (21) par l'intermédiaire du conducteur d'alimentation d'énergie (24) est disposée dans une région autre que la région formée pour antenne (41).

2. Module d'antenne selon la revendication 1, dans lequel
le substrat (11) comporte au moins deux couches dans lesquelles l'antenne cadre (31) est formée,
l'antenne cadre (31) comporte :
un premier modèle de boucle (311) qui est formé comme une boucle dans une première couche des deux couches ;
un deuxième modèle de boucle (312) qui est formé comme une boucle dans une deuxième couche des deux couches, le deuxième modèle de boucle (312) chevauchant au moins partiellement le premier modèle de boucle (311) dans une direction d'épaisseur du substrat ; et
une partie de connexion (313) connectant le premier modèle de boucle (311) et le deuxième modèle de boucle (312) l'un à l'autre.

3. Module d'antenne selon une des revendications 1 et 2, dans lequel
l'élément d'antenne (21) est positionné à proximité d'un centre de l'antenne cadre (31).

4. Module d'antenne selon la revendication 1, dans lequel
l'antenne cadre (31) est un modèle de boucle qui est enroulé au moins deux fois.

5. Équipement radio comprenant :
le module d'antenne selon une des revendications 1 à 4 ;
une batterie (7) configurée pour alimenter en énergie le module d'antenne ; et
un circuit électrique configuré pour réaliser une communication sans fil (4) avec l'extérieur en utilisant le module d'antenne.

6. Équipement radio selon la revendication 5, dans lequel
la batterie (7) est positionnée près du substrat (11) de manière à ne pas chevaucher une direction dans laquelle une communication est réalisée par l'élément d'antenne (21).

7. Équipement radio selon une des revendications 5 et 6, dans lequel
le circuit électrique comporte un dispositif de commande (6), et
le dispositif de commande (6) est configuré pour réaliser une commande telle qu'une période de transmission réalisée par l'élément d'antenne (21) ne chevauche pas une période de transmission réalisée par l'antenne cadre (31).

8. Équipement radio selon une des revendications 5 à 7, comprenant en outre :
un capteur (5) ;
un boîtier de batterie logeant la batterie (7) à l'intérieur;
un châssis de corps supportant le capteur (5) et le boîtier de batterie ; et
un couvercle de corps fixé au châssis de corps et couvrant le capteur (5) et le boîtier de batterie.
